# EUROPÄISCHE PATENTSCHRIFT

(11) **EP 2 913 698 B1**
(45) Veröffentlichungstag und Bekanntmachung des Hinweises auf die Patenterteilung: **18.09.2019**
(21) Anmeldenummer: 15156382.2
(22) Anmeldetag: 24.02.2015
(51) Int. Cl.: G02B 19/00, F21V 8/00, H01R 13/717

(54) **Lichtleitendes Bauteil sowie Feldbusmodul**
Light conducting component and field bus module
Composant conducteur de lumière et module de bus de terrain

(30) Priorität: 28.02.2014 DE 102014102697
(43) Veröffentlichungstag der Anmeldung: 02.09.2015
(73) Patentinhaber: Murrelektronik GmbH, 71570 Oppenweiler (DE)
(72) Erfinder: ULRICH, Thomas, 71522 Backnang (DE); ALGERI, Angelo, 74223 Flein (DE); HINZE, Jörg, 71540 Murrhardt (DE)
(74) Vertreter: Prinz & Partner mbB

(56) Entgegenhaltungen:
- US-A- 5 555 161
- US-A1- 2009 086 469
- US-A1- 2010 291 791
- US-A1- 2011 256 757

## Beschreibung

Die Erfindung betrifft ein lichtleitendes Bauteil zur Verwendung in einem Feldbusmodul sowie ein Feldbusmodul.

Generell stellen lichtleitende Bauteile eine Unterkategorie der Lichtleiter dar und grenzen sich von Lichtwellenleitern ab, die ebenfalls eine Unterkategorie der Lichtleiter sind. Die lichtleitenden Bauteile leiten das von einer Lichtquelle ausgesandte Licht zu einem Ort, an dem das Licht der Lichtquelle gesehen werden soll. Die lichtleitenden Bauteile sind typischerweise als Vollkörper ausgebildet, durch den das Licht in einer bestimmten Lichtausbreitungsrichtung verläuft, die im Wesentlichen parallel zur Längserstreckung des lichtleitenden Bauteils ist. Üblicherweise sind die lichtleitenden Bauteile aus einem transparenten Material gebildet und übertragen das Licht nur über kurze Distanzen. Das eingekoppelte Licht koppelt nach dem Durchlaufen des lichtleitenden Bauteils am vorgesehenen Ort an einer Austrittsfläche des lichtleitenden Bauteils aus.

Im Gegensatz dazu werden in Lichtwellenleiter Lichtsignale übertragen, indem das Licht unter einem bestimmten Winkel auf eine Ummantelung des Lichtwellenleiters trifft, um somit innerhalb des Lichtwellenleiters total reflektiert zu werden und möglichst verlustfrei über größere Entfernungen übertragen werden zu können.

Aus der US 5,555,161 A ist ein Lichtleiter für eine Schaltvorrichtung eines Kraftfahrzeugs bekannt, der eingestrahltes Licht zu einer Austrittsfläche leitet, wobei das Licht an den seitlichen Begrenzungen des Lichtleiters reflektiert, um im Wesentlichen senkrecht aus der Austrittsfläche auszutreten.

Die US 2011/0256757 A1 zeigt eine RJ-45-Steckverbindung, an der zwei Lichtleiter vorgesehen sind, die miteinander zusammenwirken, um Licht zu übertragen.

Aus der US 2009/0086469 A1 ist ein elektrischer Steckverbinder bekannt, der ein lichtleitendes Bauteil aufweist, wobei das durch das Bauteil laufende Licht an dessen Seitenwänden reflektiert wird.

Die US 2010/0291791 A1 zeigt einen Kabelverbinder, der einen Lichtleiter mit einer Austrittsfläche aufweist.

Die lichtleitenden Bauteile werden beispielsweise bei Feldbusmodulen verwendet, um die Aktivität eines Anschlusses oder einen Zustand des Feldbusmoduls oder des Anschlusses anzuzeigen. Hierzu wird das von einer innerhalb des Feldbusmoduls angeordneten Lichtquelle ausgesandte Signal vom lichtleitenden Bauteil an die Oberfläche des Feldbusmoduls übertragen, sodass dies von einem Nutzer gesehen werden kann.

Aufgrund der dezentralen Verwendung der Feldbusmodule und den damit verbundenen unterschiedlichen Einbaulagen der Feldbusmodule kann es vorkommen, dass nur eine seitliche Sicht auf das lichtleitende Bauteil möglich ist. Da sich das Licht im lichtleitenden Bauteil jedoch nur parallel zur Längserstreckung des lichtleitenden Bauteils ausbreitet, ist die seitliche Sichtbarkeit an der Austrittsfläche des lichtleitenden Bauteils gering, sodass das Licht schlecht zu sehen ist. Dieses Problem verstärkt sich bei einer hellen Umgebung. Im Stand der Technik wurde versucht das Problem dadurch zu lösen, dass die Austrittsfläche des Lichts am lichtleitenden Bauteil aufgeraut wird. Hiermit konnte das Problem der schlechten seitlichen Sichtbarkeit jedoch nicht zufriedenstellend behoben werden.

Es ist daher Aufgabe der Erfindung, ein lichtleitendes Bauteil bereitzustellen, das eine gute Sichtbarkeit über einen großen Betrachtungswinkel aufweist.

Die Aufgabe der Erfindung wird durch ein lichtleitendes Bauteil zur Verwendung in einem Feldbusmodul gelöst, wobei das lichtleitende Bauteil einen Hauptkörper, durch den sich Licht entlang einer definierten Lichtausbreitungsrichtung ausbreiten kann, und ein Austrittselement an einem Ende des Hauptkörpers hat, an dem das Licht aus dem lichtleitenden Bauteil auskoppeln kann, wobei wenigstens ein Reflexionselement in Lichtausbreitungsrichtung vor dem Austrittselement angeordnet ist, an dem zumindest ein Teil des Lichts reflektiert werden kann, wobei der Teil des Lichts derart, dass das Licht im Wesentlichen isotrop in einem Winkelbereich von etwa -90° bis etwa +90° zur Lichtausbreitungsrichtung am Austrittselement auskoppelt. Der Grundgedanke der Erfindung ist es, die seitliche Sichtbarkeit des lichtleitenden Bauteils dadurch zu erhöhen, dass wenigstens ein Reflexionselement im oder am lichtleitenden Bauteil angeordnet ist, an dem das ausgesandte Licht reflektiert und gestreut wird. Durch die damit verbundene Streuung des Lichts ergibt sich eine bessere seitliche Sichtbarkeit, da die Lichtstrahlen am Austrittselement nicht nur senkrecht zur Austrittsfläche auskoppeln. Hierdurch ist es möglich, dass das ausgekoppelte Licht in Draufsicht sowie aus beliebigen Blinkwinkeln erkannt werden kann, insbesondere in einer Seitenansicht. Es ergibt sich also eine gute seitliche sowie frontale Sichtbarkeit. Aufgrund der isotropen Verteilung im Winkelbereich von etwa -90° bis etwa +90° zur Lichtausbreitungsrichtung koppeln die Lichtstrahlen in einer Querschnittsansicht halbkreisförmig am Austrittselement aus. Für das menschliche Auge ergibt sich aufgrund der Streuung und der Reflexion des Lichts eine im Wesentlichen isotrope Verteilung in diesem Winkelbereich, wobei Intensitätsschwankungen des Lichts von einigen Prozent auftreten können. Diese sind aber so gering, dass sie fast nicht wahrgenommen werden.

Gemäß einem Aspekt der Erfindung ist der Hauptkörper als Lichtleitstab ausgebildet, insbesondere aus einem transparenten Kunststoff wie PMMA oder Polycarbonat. Der Hauptkörper ist als ein Vollkörper ausgebildet, der aus einem Material besteht, durch den sich das Licht ausbreiten kann. Der Hauptkörper kann zudem aufgrund des transparenten Kunststoffs kostengünstig hergestellt werden. Ferner kann der Hauptkörper ein vollständig gegossenes Bauteil sein.

Gemäß einem weiteren Aspekt der Erfindung ist vorgesehen, dass das Reflexionselement Teil des Hauptkörpers ist. Über die einstückige Ausbildung des Hauptkörpers und des Reflexionselements können Fertigungstoleranzen vermieden werden. Das Reflexionselement kann insbesondere als ein Abschnitt des Hauptkörpers ausgebildet sein, wie eine von außen eingebrachte Einkerbung in einer Seitenwand des als Vollkörper ausgebildeten Hauptkörpers, wodurch das Licht auch an einem transparenten Kunststoff reflektieren kann.

Insbesondere ist das Reflexionselement am Übergang zum Austrittselement vorgesehen. Durch die direkte Anordnung des Reflexionselements am Austrittselement kann der Winkelbereich der Reflexionen besser eingestellt werden. Ferner wird dadurch erreicht, dass das eingekoppelte Licht nicht vor dem Austrittselement aus dem lichtleitenden Bauteil austritt. Des Weiteren ist das Reflexionselement dadurch in Draufsicht auf das lichtleitende Bauteil nicht erkennbar.

Ein weiterer Aspekt der Erfindung sieht vor, dass das Reflexionselement einen Winkel größer 0° und kleiner 90° zur Lichtausbreitungsrichtung aufweist, insbesondere einen Winkel größer als der Grenzwinkel der Totalreflexion. Über die winklige Lage des Reflexionselements wird die Streuung des Lichts und die entsprechende seitliche Sichtbarkeit eingestellt, wobei ab einem Winkel, welcher größer als der Grenzwinkel der Totalreflexion ist, garantiert ist, dass das gesamte auf das Reflexionselement treffende Licht total reflektiert wird. Das Reflexionselement kann insbesondere als eine keilförmige Einkerbung im Hauptkörper ausgebildet sein.

Ein weiterer Aspekt der Erfindung sieht vor, dass das Reflexionselement gebogen ausgeführt ist, insbesondere konvex. Über die Krümmung des Reflexionselements wird die Winkelverteilung der Reflexion vergrößert, da das Licht nicht nur unter einem bestimmten Winkel, sondern unter einem durch die Krümmung bedingten Winkelbereich reflektiert wird. Dies vergrößert die Streuung und verbessert nochmals die seitliche Sichtbarkeit.

Gemäß einem weiteren Aspekt der Erfindung weist das Austrittselement mehrere Austrittsflächen auf, insbesondere eine zur Lichtausbreitungsrichtung senkrecht ausgebildete Hauptaustrittsfläche sowie wenigstens eine dazu winklig angeordnete Nebenaustrittsfläche. Über die verschiedenen Austrittsflächen kann eine weitere Brechung des Lichts beim Austritt aus dem lichtleitenden Bauteil erreicht werden, sodass sich insgesamt ein Betrachtungswinkel von ca. 180° ergibt.

Die Austrittsflächen können ferner rau ausgebildet sein, sodass sich ein gleichmäßiges Aufleuchten des Austrittselements ergibt. Hierbei müssen die Austrittsflächen mit der Erodierstruktur Ref. 18 nach VDI 3400 erodiert werden und anschließend mit dem Strahlmittel SM 2002A unter einem Arbeitsdruck von 2 Bar gestrahlt werden.

Ein weiterer Aspekt der Erfindung sieht vor, dass das Austrittselement eine Auflagefläche hat, die derart ausgebildet ist, dass das Austrittselement mittels der Auflagefläche am Feldbusmodul angeordnet werden kann. Hierdurch wird erreicht, dass eine dichte, abschließende Verbindung zwischen dem lichtleitenden Bauteil und dem Feldbusmodul ausgebildet ist, wodurch kein parasitäres Streulicht bzw. externes Licht einkoppeln kann. Des Weiteren wird über die direkte Anlage erreicht, dass keine Schmutzkante vorhanden ist, an der sich Fremdpartikel anlagern können.

Insbesondere ist das Austrittselement einstückig mit dem Hauptkörper ausgebildet. Hierdurch werden Ungenauigkeiten beim Zusammenbau der einzelnen Elemente vermieden. Das lichtleitende Bauteil kann somit in einem einzigen Spritzgussverfahren oder Kunststoffformverfahren hergestellt werden.

Gemäß einem weiteren Aspekt der Erfindung weist der Hauptkörper zumindest einen Abschnitt aus einer transparenten Vergussmasse auf. Die transparente Vergussmasse sorgt für eine homogene Mischung des Lichts, sodass eine homogene Farbdarstellung der dem lichtleitenden Bauteil zugeordneten Lichtquelle erreicht wird.

Ein weiterer Aspekt der Erfindung sieht vor, dass der Hauptkörper zwei Lichtleitstäbe aufweist. Hierdurch kann zum einen ein größerer Bereich abgedeckt werden, und zum anderen können dem lichtleitenden Bauteil zwei Lichtquellen zugeordnet werden.

Die Aufgabe der Erfindung wird zudem durch ein Feldbusmodul gelöst, das ein Gehäuse und ein lichtleitendes Bauteil der zuvor genannten Art aufweist. Durch die Verwendung eines lichtleitenden Bauteils der zuvor genannten Art wird erreicht, dass zusätzlich zu der typischerweise guten frontalen Sichtbarkeit eine gute seitliche Sichtbarkeit des ausgekoppelten Lichts möglich ist. Hierdurch kann auch bei ungünstigen Einbausituationen der Lichtaustritt am Feldbusmodul von einem Bediener erkannt werden. Dies ist wichtig, da das Lichtsignal bei einem Feldbusmodul zu Diagnosezwecken verwendet wird, insbesondere um die Aktivität eines Anschlusses oder einen Zustand des Feldbusmoduls oder des Anschlusses anzuzeigen. Die zuvor genannten Vorteile des lichtleitenden Bauteils ergeben sich somit analog für das Feldbusmodul, insbesondere das kompakte Design und die gute seitliche Sichtbarkeit.

Insbesondere kann das Gehäuse eine Doppelwand haben, sodass ein Hohlraum zwischen der die Oberfläche des Feldbusmoduls bildenden Wand und der anderen Wand der Doppelwand ausgebildet ist, wobei das lichtleitende Bauteil in der Doppelwand angeordnet ist, insbesondere an einem Anschluss des Feldbusmoduls. Hierdurch ist ein Aufnahmeraum für das lichtleitende Bauteil im Gehäuse ausgebildet.

Gemäß einem Aspekt der Erfindung grenzt das Reflexionselement an den Hohlraum an. Über den Lichtbrechungsindexwechsel vom Reflexionselement zum Hohlraum wird eine Brechung bzw. Reflexion des Lichts am Reflexionselement möglich, insbesondere wenn es sich bei dem Reflexionselement um eine Einkerbung in einem aus einem Vollkörper gebildeten lichtleitenden Bauteil handelt.

Ein Aspekt der Erfindung sieht vor, dass der Hohlraum mit einem Gas oder einem Gasgemisch gefüllt ist, insbesondere Luft. Das Reflexionsverhalten des Lichts kann über den Füllstoff eingestellt werden, da der Füllstoff den Brechungsindexunterschied und daher das Brechungsverhalten des Lichts am Reflexionselement beeinflusst.

Gemäß einem Aspekt der Erfindung ist im Feldbusmodul wenigstens eine Lichtquelle vorgesehen, insbesondere eine mehrfarbige LED, die einem Hauptkörper des lichtleitenden Bauteils zugeordnet ist. Das lichtleitende Bauteil leitet das von der Lichtquelle ausgesandte Licht, wobei dies am Reflexionselement entsprechend reflektiert wird, um die seitliche Sichtbarkeit am Feldbusmodul zu erhöhen. Durch die mehrfarbige Ausbildung können mehrere Zustände angezeigt werden. Darüber hinaus können die unterschiedlichen Farben der LED derart angeordnet sein, dass sie bei unzureichender Reflexion an der Austrittsfläche separat auskoppeln.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine Perspektivansicht eines erfindungsgemäßen lichtleitenden Bauteils gemäß einer ersten Ausführungsform,
- Figur 2 eine Perspektivansicht eines erfindungsgemäßen lichtleitenden Bauteils gemäß einer zweiten Ausführungsform,
- Figur 3 das lichtleitende Bauteil aus Figur 2 aus einer anderen Perspektive,
- Figur 4 ein erfindungsgemäßes Feldbusmodul mit mehreren lichtleitenden Bauteilen, und
- Figur 5 eine schematische Schnittdarstellung durch das Feldbusmodul mit lichtleitendem Bauteil.

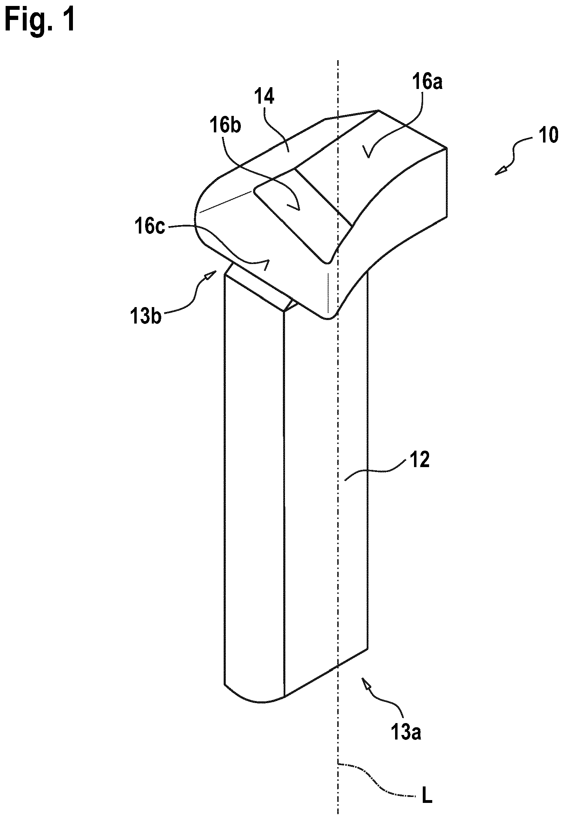

In Figur 1 ist ein lichtleitendes Bauteil 10 gemäß einer ersten Ausführungsform gezeigt, das einen Hauptkörper 12 sowie ein Austrittselement 14 umfasst, die einteilig miteinander ausgebildet sind.

Der Hauptkörper 12 ist in der gezeigten Ausführungsform aus einem Lichtleitstab gebildet, sodass es sich bei dem Hauptkörper 12 um einen Vollkörper handelt, der vorzugsweise aus einem transparenten Kunststoff gebildet ist. Der Hauptkörper 12 wird über ein erstes Ende 13a einer hier nicht dargestellten Lichtquelle zugeordnet, sodass Licht an diesem ersten Ende 13a in den Hauptkörper 12 einkoppeln kann.

An einem zweiten Ende 13b des Hauptkörpers 12 ist das Austrittselement 14 angeordnet, an dem das ins lichtleitende Bauteil 10 eingekoppelte Licht wieder auskoppelt. Das Austrittselement 14 weist hierzu mehrere Austrittsflächen 16 auf, wobei eine senkrecht zur Lichtausbreitungsrichtung L des Lichts angeordnete Hauptaustrittsfläche 16a sowie eine erste und eine zweite Nebenaustrittsflächen 16b, 16c vorgesehen sind. Die Nebenaustrittsflächen 16b, 16c sind zur Hauptaustrittsfläche 16a unter einem Winkel angeordnet, wobei die dritte Nebenaustrittsfläche 16c und die zweite Nebenaustrittsfläche 16b ebenfalls einen Winkel einschließen.

Insgesamt ergibt sich eine nach außen abfallende Anordnung der Austrittsflächen 16.

Die Lichtausbreitungsrichtung L des Lichts im Hauptkörper 12 ist parallel zur Längsachse des Hauptkörpers 12, die analog mit dem Bezugszeichen L bezeichnet werden kann.

Das Austrittelement 14 ist in der gezeigten Ausführungsform auf die Austrittsflächen 16 reduziert, über die das Licht am Austrittselement 14 tatsächlich austritt, wie nachfolgend noch erläutert wird. Andere Gestaltungen des Austrittselements 14 sind jedoch denkbar, insbesondere solche, die eine größere Gesamtfläche aufweisen, die dann jedoch Teilflächen aufweist, an denen kein Licht austritt.

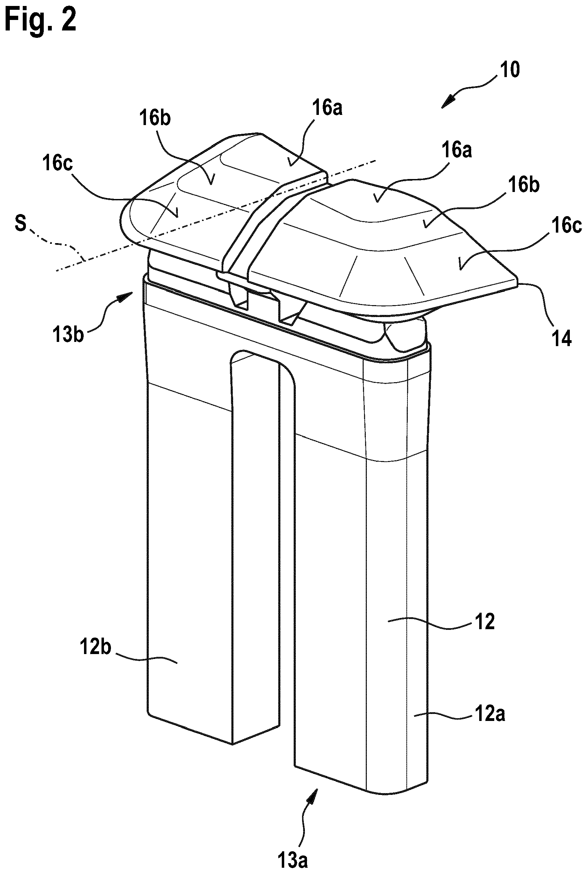

In Figur 2 ist ein lichtleitendes Bauteil 10 gemäß einer zweiten Ausführungsform gezeigt. Funktionsgleiche Elemente, die auch in der ersten Ausführungsform in Figur 1 gezeigt sind, werden mit denselben Bezugszeichen versehen.

Das lichtleitende Bauteil 10 gemäß der zweiten Ausführungsform weist einen Hauptkörper 12 auf, der aus zwei Lichtleitstäben 12a, 12b ausgebildet ist. Über ein erstes Ende 13a kann der Hauptkörper 12 zwei Lichtquellen zugeordnet werden, eine Lichtquelle pro Lichtleitstab 12a, 12b.

Aus der gezeigten Perspektive ist ferner zu erkennen, dass die beiden Lichtleitstäbe 12a, 12b nur teilweise getrennt voneinander ausgebildet sind, da sie am zweiten Ende 13b zusammenlaufen, um so den gemeinsamen Hauptkörper 12 auszubilden.

Analog zur ersten Ausführungsform ist ein Austrittselement 14 am zweiten Ende 13b des Hauptkörpers 12 vorgesehen, welches gegenüber der ersten Ausführungsform jedoch in etwa doppelt so groß ausgebildet ist, sodass es beiden Lichtleitstäben 12a, 12b zugeordnet ist. Das Austrittselement 14 verfügt über eine Hauptaustrittsfläche 16a sowie einer ersten und einer zweiten Nebenaustrittsfläche 16b, 16c pro Lichtleitstab 12a, 12b. Das Austrittselement 14 ist dabei spiegelsymmetrisch zu einer Symmetrieachse S ausgebildet, die das Austrittselement 14 in zwei Hälften unterteilt.

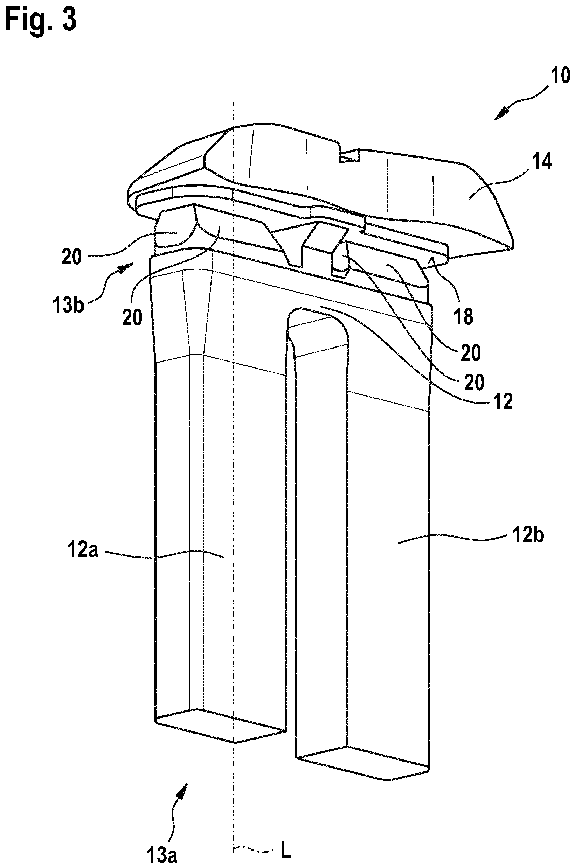

In Figur 3 ist das lichtleitende Bauteil 10 der Figur 2 in einer anderen Perspektive gezeigt, die in etwa um 180° gedreht ist.

Aus der in Figur 3 gezeigten Perspektive ist eine Auflagefläche 18 zu erkennen, welche am Austrittselement 14 ausgebildet ist. Die Auflagefläche 18 ist an der dem Hauptkörper 12 zugeordneten Seite des Austrittselements 14 angeordnet, also zu den Austrittsflächen 16 entgegengesetzt. Über die Auflagefläche 18 kann das lichtleitende Bauteil 10 direkt an einem Gehäuse eines hier nicht dargestellten Feldbusmoduls angeordnet werden.

Ferner geht aus der Figur 3 hervor, dass das lichtleitende Bauteil 10 im Bereich seines Hauptkörpers 12 zumindest ein Reflexionselement 20 aufweist, das im Übergangsbereich des Hauptkörpers 12 zum Austrittselement 14 ausgebildet ist.

Das Reflexionselement 20 ist von außen als ein schräger Abschnitt in der Seitenwand des Hauptkörpers 12 ausgebildet, sodass es an die äußere Umgebung des lichtleitenden Bauteils 10 angrenzt. Das Reflexionselement 20 kann über eine Einkerbung im als Vollkörper ausgebildeten Hauptkörper 12 hergestellt sein, die sich schräg zur Längsausrichtung L des Hauptkörpers 12 erstreckt. Das Reflexionselement 20 kann insbesondere durch einen keilförmigen Ausschnitt im Hauptkörper 12 ausgebildet werden.

Das lichtleitende Bauteil 10 weist generell, das heißt auch in der in Figur 1 gezeigten Ausführungsform, pro Lichtleitstab 12a, 12b zwei bis vier Reflexionselemente 20 auf, die insbesondere paarweise gegenüberliegend angeordnet sind. Dies geht auch aus den Perspektivdarstellungen der Figuren 1 bis 3 der beiden Ausführungsformen hervor.

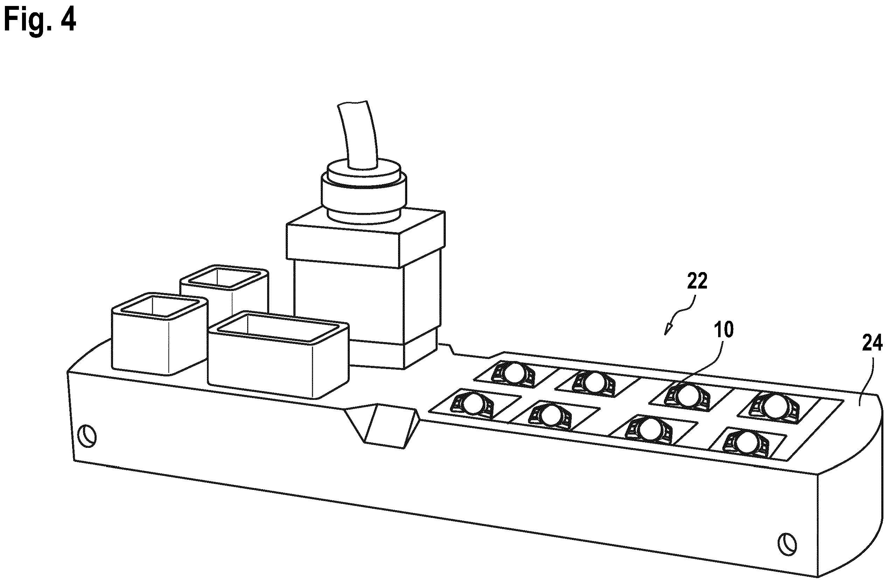

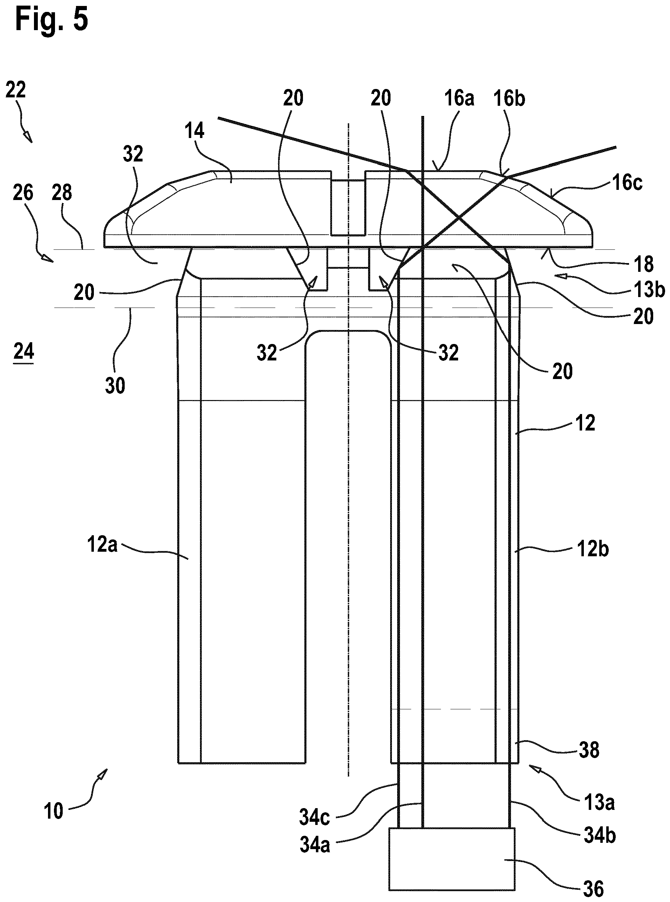

Die Reflexionselemente 20 sind zudem in Figur 5 zu sehen, anhand der auch die Funktionsweise der Reflexionselemente 20 erklärt wird. Figur 5 zeigt eine Schnittdarstellung eines Feldbusmoduls 22 mit darin angeordnetem lichtleitenden Bauteil 10, das in Figur 4 in einer Perspektivansicht samt Gehäuse 24 gezeigt ist.

In Figur 5 ist das Gehäuse 24 des Feldbusmoduls 22 durch die gestrichelten Linien schematisch dargestellt, wobei die beiden gestrichelten Linien eine Doppelwand 26 des Gehäuses 24 darstellen. Eine erste Wand 28 bildet die Oberfläche des Gehäuses 24, wohingegen eine zweite Wand 30 hierzu versetzt ist und mit der ersten Wand 28 einen Hohlraum 32 innerhalb des Gehäuses 24 und des Feldbusmoduls 22 ausbildet. Der Hohlraum 32 ist durch die Wände 28, 30 abgedichtet. Der Hohlraum 32 bildet demnach einen luftgefüllten Raum oder ein Luftpolster innerhalb des Gehäuses 24.

Das im Feldbusmodul 22 angeordnete lichtleitende Bauteil 10 ist gemäß der zweiten Ausführungsform ausgeführt, sodass der Hauptkörper 12 zwei Lichtleitstäbe 12a, 12b umfasst.

Das lichtleitende Bauteil 10 ist im Gehäuse 24 derart angeordnet, dass es mit seiner Auflagefläche 18 auf der ersten Wand 28 aufliegt, sodass nur das Austrittselement 14 von der Oberfläche des Gehäuses 24 absteht. Die nach außen abfallende Geometrie des Austrittselements 14 geht aus der Figur 5 besonders gut hervor, da erkennbar ist, dass die Austrittsflächen 16 am Rand des Austrittselements 14 fast bündig mit der Oberfläche des Gehäuses 24 abschließen.

Ferner sind die Reflexionselemente 20 aufgrund der Lage des lichtleitenden Bauteils 10 im Bereich des Hohlraums 32 des Feldbusmoduls 22 angeordnet und grenzen direkt an diesen an. Hierdurch ergibt sich ein Brechungsindexsprung zwischen den als Einkerbungen im Vollkörper des Hauptkörpers 12 ausgebildeten Reflexionselementen 20 und dem Hohlraum 32, der mit Luft gefüllt ist.

Alternativ kann der Hohlraum 32 mit einem Gas, einem Gasgemisch oder einem sonstigen Material gefüllt sein, durch das sich der Brechungsindexsprung vom Hauptkörper 12 zum Hohlraum 32 ergibt. Der Brechungsindexsprung ist nötig, damit Licht an den Reflexionselementen 20 überhaupt reflektieren kann.

In der Figur 5 sind beispielhaft drei Lichtstrahlen 34a - 34c gezeigt, welche von einer schematisch dargestellten Lichtquelle 36 ausgestrahlt werden, die im Feldbusmodul 22 angeordnet und dem Lichtleitstab 12b zugeordnet ist.

Die Lichtstrahlen 34 werden von der Lichtquelle 36 parallel zur Längsausrichtung L des lichtleitenden Bauteils 10 und des Hauptkörpers 12 ausgestrahlt, sodass sie senkrecht am ersten Ende 13a in den Hauptkörper 12 einkoppeln und zunächst parallel zur Längsausrichtung L verlaufen.

Der erste Lichtstrahl 34a verläuft durch den Hauptkörper 12 des lichtleitenden Bauteils 10 und wechselwirkt nicht mit einem der Reflexionselemente 20, sodass er durch das Austrittselement 14 läuft und direkt auf die senkrecht zur Lichtausbreitungsrichtung L angeordnete Hauptaustrittsfläche 16a trifft. Durch diese koppelt der erste Lichtstrahl 34a senkrecht aus. Dieser beispielhafte erste Lichtstrahl 34a wird von einem Benutzer bei frontaler Sicht auf das lichtleitende Bauteil 10 bzw. das Feldbusmodul 22 gesehen.

Der zweite Lichtstrahl 34b verläuft zunächst parallel zum ersten Lichtstrahl 34a, wobei er im Bereich des Hohlraums 32 des Feldbusmoduls 22 auf eines der Reflexionselemente 20 trifft und aufgrund des Lichtbrechungsindexunterschieds zwischen dem Hauptkörper 12 und dem Hohlraum 32 an dem Reflexionselement 20 reflektiert.

Aufgrund der Reflexion tritt der zweite Lichtstrahl 34b unter einem Winkel in das Austrittselement 14 ein und trifft unter einem Winkel auf die Hauptaustrittsfläche 16a. Dies hat zur Folge, dass der zweite Lichtstrahl 34b beim Übergang vom Austrittselement 14 zum Außenbereich erneut gebrochen wird, wodurch sich eine noch größere Streuung des Lichts in Bezug auf die Lichtausbreitungsrichtung L innerhalb des Hauptkörpers 12 ergibt. Der beispielhafte zweite Lichtstrahl 34b koppelt am Austrittselement 14 unter einem Winkel von ca. -75° zur Lichtausbreitungsrichtung L aus.

Der dritte Lichtstrahl 34c verläuft im Hauptkörper 12 zunächst parallel zu den beiden anderen Lichtstrahlen 34a, 34b, wobei der dritte Lichtstrahl 34c auf ein anderes Reflexionselement 20 trifft, welches ebenfalls dem Hohlraum 32 zugeordnet ist. An diesem Reflexionselement 20 wird der dritte Lichtstrahl 34c reflektiert, wobei die Reflexion aufgrund der gegenüberliegenden Ausrichtung der beiden Reflexionselemente 20 zur anderen Richtung erfolgt im Vergleich zum zweiten Lichtstrahl 34b.

Der dritte Lichtstrahl 34c koppelt nach der Reflexion in das Austrittselement 14 unter einem Winkel ein und trifft auf die erste Nebenaustrittsfläche 16b, an der er auskoppelt. Die erste Nebenaustrittsfläche 16b ist, wie oben bereits beschrieben, winklig zur Hauptaustrittsfläche 16a angeordnet. Hierdurch ergibt sich eine weitere Brechung des Lichtstrahls 34c, sodass der Streubereich des Lichts weiter vergrößert ist. Der beispielhafte dritte Lichtstrahl 34c koppelt am Austrittselement 14 unter einem Winkel von ca. +78° zur Lichtausbreitungsrichtung L aus.

Die drei Lichtstrahlen 34a - 34c sind lediglich beispielhafte Lichtstrahlen, die das Konzept verdeutlichen sollen. Insgesamt kann aufgrund der Reflexionselemente 20 eine im Wesentlichen isotrope Verteilung der ausgekoppelten Lichtstrahlen in einem Winkelbereich von etwa -90° bis etwa +90° in Bezug zur Lichtausbreitungsrichtung L erreicht werden. Dies bedeutet, dass die am Austrittselement 14 auskoppelenden Lichtstrahlen in der gezeigten Schnittebene einen Halbkreis ausbilden.

Die Reflexionselemente 20 sind in Bezug auf die Lichtausbreitungsrichtung L derart angeordnet, dass sie einen Winkel aufweisen, der größer als der Grenzwinkel der Totalreflexion ist, sodass sämtliches auf die Reflexionselemente 20 auftreffende Licht an diesen reflektiert wird. Der Grenzwinkel der Totalreflexion kann dabei über das Medium im Hohlraum 32 eingestellt werden.

Insgesamt werden mindestens 20% des gesamten von der Lichtquelle 36 ausgesandten Lichts an den Reflexionselementen 20 reflektiert, wobei dies von der Größe der Reflexionselemente 20 abhängig ist. Der Anteil des reflektierten Lichts ist dabei so gewählt, dass eine im Wesentlichen isotrope Verteilung wahrgenommen wird.

Da zwei weitere Reflexionselemente 20 senkrecht zu den in der Zeichenebene gezeigten Reflexionselementen 20 vorgesehen sind, ergeben sich hieraus weitere im Wesentlichen halbkreisförmige isotrope Verteilungen der auskoppelnden Lichtstrahlen.

Die Reflexionselemente 20 können ferner gekrümmt ausgebildet sein, wodurch sich eine Reflexion des Lichts in einem Winkelbereich und nicht nur unter einem festen Winkel ergibt. Hierdurch ist es möglich, dass die Lichtstrahlen am Austrittselement isotrop in einer Halbsphäre austreten, also in einer Halbkugel. Dies gewährleistet, dass das ausgekoppelte Licht sowohl in frontaler als auch in seitlicher Ansicht deutlich zu erkennen ist. Das ausgekoppelte Licht ist demnach aus jedem Blickwinkel der Halbsphäre zu sehen.

Die Austrittsflächen 16 am Austrittselement 14 können ferner eine Rauigkeit erzeugt durch eine Erodierstruktur Ref. 18 nah VDI 3400 und anschließender Behandlung mit dem Strahlmittel SM 2002A unter einem Arbeitsdruck von 2 Bar haben, so dass das an den Austrittsflächen 16 ausgekoppelte Licht eine homogenere Lichtausbreitung aufweist.

Bei der verwendeten Lichtquelle 36 kann es sich um eine mehrfarbige LED handeln, die derart ausgebildet ist, dass beispielsweise der zweite Lichtstrahl 34b rot und der dritte Lichtstrahl 34c gelb ist, sodass sich insgesamt ein oranges Licht ergibt. Sollte die Streuung unzureichend sein, so ergibt sich bei seitlicher Betrachtung lediglich ein rotes oder gelbes Signal.

Alternativ kann die mehrfarbige LED auch dazu verwendet werden, um generell zwei bestimmten Zuständen zugeordnete Farben darzustellen, wie rot und grün.

Das von der Lichtquelle 36 ausgesandte Licht kann zudem einen in Figur 5 schematisch dargestellten Abschnitt 38 passieren, der aus einer transparenten Vergussmasse besteht. Im Abschnitt 38 tritt eine Streuung des Lichts auf, die die homogene Farbdarstellung der farbigen Lichtquelle 36 verbessert.

Mit dem erfindungsgemäßen lichtleitenden Bauteil 10 ergibt sich ein schlankes Design, das bei der Verwendung am Feldbusmodul 22 von Vorteil ist, da keine Schmutzkanten auftreten und die Reflexionselemente 20 von außen nicht sichtbar sind.

## Patentansprüche

1. Lichtleitendes Bauteil (10) zur Verwendung in einem Feldbusmodul (22) wobei das lichtleitende Bauteil (10) einen Hauptkörper (12), durch den sich Licht entlang einer definierten Lichtausbreitungsrichtung ausbreiten kann, und ein Austrittselement (14) an einem Ende (13b) des Hauptkörpers (12) hat, an dem das Licht aus dem lichtleitenden Bauteil (10) auskoppeln kann, wobei wenigstens ein Reflexionselement (20) in Lichtausbreitungsrichtung vor dem Austrittselement (14) angeordnet ist, an dem zumindest ein Teil des Lichts reflektiert werden kann, **dadurch gekennzeichnet, dass**
der Teil des Lichts derart reflektiert, dass das Licht im Wesentlichen isotrop in einem Winkelbereich von etwa -90° bis etwa +90° zur Lichtausbreitungsrichtung am Austrittselement auskoppelt.

2. Lichtleitendes Bauteil (10) nach Anspruch 1, **dadurch gekennzeichnet, dass** der Hauptkörper (12) als Lichtleitstab (12a, 12b) ausgebildet ist, insbesondere aus einem transparenten Kunststoff wie PMMA oder Polycarbonat.

3. Lichtleitendes Bauteil (10) nach einem der vorhergehenden Ansprüche, **dadurch gekennzeichnet, dass** das Reflexionselement (14) Teil des Hauptkörpers (12) ist.

4. Lichtleitendes Bauteil (10) nach einem der vorhergehenden Ansprüche, **dadurch gekennzeichnet, dass** das Reflexionselement (20) am Übergang zum Austrittselement (14) vorgesehen ist.

5. Lichtleitendes Bauteil (10) nach einem der vorhergehenden Ansprüche, **dadurch gekennzeichnet, dass** das Reflexionselement (20) einen Winkel größer 0° und kleiner 90° zur Lichtausbreitungsrichtung aufweist, insbesondere einen Winkel größer als der Grenzwinkel der Totalreflexion.

6. Lichtleitendes Bauteil (10) nach einem der vorhergehenden Ansprüche, **dadurch gekennzeichnet, dass** das Reflexionselement (20) gebogen ausgeführt ist, insbesondere konvex.

7. Lichtleitendes Bauteil (10) nach einem der vorhergehenden Ansprüche, **dadurch gekennzeichnet, dass** das Austrittselement (20) mehrere Austrittsflächen (16) aufweist, insbesondere eine zur Lichtausbreitungsrichtung senkrecht ausgebildete Hauptaustrittsfläche (16a) sowie wenigstens eine dazu winklig angeordnete Nebenaustrittsfläche (16b, 16c).

8. Lichtleitendes Bauteil (10) nach einem der vorhergehenden Ansprüche, **dadurch gekennzeichnet, dass** das Austrittselement (14) eine Auflagefläche (18) hat, die derart ausgebildet ist, dass das Austrittselement (10) mittels der Auflagefläche (18) am Feldbusmodul (22) angeordnet werden kann.

9. Lichtleitendes Bauteil (10) nach einem der vorhergehenden Ansprüche, **dadurch gekennzeichnet, dass** das Austrittselement (14) einstückig mit dem Hauptkörper (12) ausgebildet ist und/oder dass der Hauptkörper (12) zumindest einen Abschnitt (38) aus einer transparenten Vergussmasse aufweist.

10. Lichtleitendes Bauteil (10) nach einem der vorhergehenden Ansprüche, **dadurch gekennzeichnet, dass** der Hauptkörper (12) zwei Lichtleitstäbe (12a, 12b) aufweist.

11. Feldbusmodul (22) mit einem Gehäuse (24) und einem lichtleitenden Bauteil (10) nach einem der vorhergehenden Ansprüche.

12. Feldbusmodul (22) nach Anspruch 11, **dadurch gekennzeichnet, dass** das Gehäuse (24) zumindest eine Doppelwand (26) aufweist, sodass ein Hohlraum (32) zwischen der die Oberfläche des Feldbusmoduls (22) bildenden Wand (28) und der anderen Wand (30) der Doppelwand (26) ausgebildet ist, wobei das lichtleitende Bauteil (10) in der Doppelwand (26) angeordnet ist, insbesondere an einem Anschluss des Feldbusmoduls (22).

13. Feldbusmodul (22) nach Anspruch 12, **dadurch gekennzeichnet, dass** das Reflexionselement (20) an den Hohlraum (32) angrenzt.

14. Feldbusmodul (22) nach einem der Ansprüche 11 bis 13, **dadurch gekennzeichnet, dass** wenigstens eine Lichtquelle (36), insbesondere eine mehrfarbige LED, im Feldbusmodul (22) vorgesehen ist, die einem Hauptkörper (12) des lichtleitenden Bauteils (10) zugeordnet ist.

## Claims

1. A light guiding component (10) for use in a field bus module (22), the light guiding component (10) having a main body (12) through which light can propagate along a defined light propagation direction, and an exit element (14) at one end (13b) of the main body (12) at which the light can couple out of the light guiding component (10), at least one reflection element (20) being arranged upstream of the exit element (14) in the light propagation direction at which at least part of the light can be reflected, **characterized in that** this part of the light reflects in such a way that the light couples out substantially isotropically at the exit element in an angular range of from approximately -90 degrees to approximately +90 degrees with respect to the light propagation direction.

2. The light guiding component (10) according to claim 1, **characterized in that** the main body (12) is configured as a light guide rod (12a, 12b), in particular made from a transparent plastic material such as PMMA or polycarbonate.

3. The light guiding component (10) according to either of the preceding claims, **characterized in that** the reflection element (14) is part of the main body (12).

4. The light guiding component (10) according to any of the preceding claims, **characterized in that** the reflection element (20) is provided at the transition to the exit element (14).

5. The light guiding component (10) according to any of the preceding claims, **characterized in that** the reflection element (20) has an angle greater than 0 degrees and smaller than 90 degrees with respect to the light propagation direction, in particular an angle greater than the critical angle of total reflection.

6. The light guiding component (10) according to any of the preceding claims, **characterized in that** the reflection element (20) is of an arcuate configuration, in particular convex.

7. The light guiding component (10) according to any of the preceding claims, **characterized in that** the exit element (20) includes a plurality of exit surfaces (16), in particular a main exit surface (16a) formed perpendicular to the light propagation direction and at least one secondary exit surface (16b, 16c) arranged at an angle thereto.

8. The light guiding component (10) according to any of the preceding claims, **characterized in that** the exit element (14) has a supporting surface (18) which is configured such that the exit element (10) can be arranged at the field bus module (22) by means of the supporting surface (18).

9. The light guiding component (10) according to any of the preceding claims, **characterized in that** the exit element (14) is formed integrally with the main body (12) and/or **in that** the main body (12) includes at least one section (38) made from a transparent potting compound.

10. The light guiding component (10) according to any of the preceding claims, **characterized in that** the main body (12) includes two light guide rods (12a, 12b).

11. A field bus module (22) comprising a housing (24) and a light guiding component (10) according to any of the preceding claims.

12. The field bus module (22) according to claim 11, **characterized in that** the housing (24) includes at least one double wall (26) so that a cavity (32) is formed between the wall (28) forming the surface of the field bus module (22) and the other wall (30) of the double wall (26), the light guiding component (10) being arranged in the double wall (26), in particular at a connection of the field bus module (22).

13. The field bus module (22) according to claim 12, **characterized in that** the reflection element (20) is adjacent to the cavity (32).

14. The field bus module (22) according to any of claims 11 to 13, **characterized in that** at least one light source (36), in particular a multicolor LED, is provided in the field bus module (22) and is associated with a main body (12) of the light guiding component (10).

## Revendications

1. Composant guidant la lumière (10) pour l'utilisation dans un module de bus de terrain (22), le composant guidant la lumière (10) présentant un corps principal (12) à travers lequel de la lumière peut se propager le long d'un sens de propagation de lumière défini, et un élément de sortie (14) à une extrémité (13b) du corps principal (12), au niveau duquel la lumière peut découpler hors du composant guidant la lumière (10), au moins un élément de réflexion (20) étant agencé an amont de l'élément de sortie (14) dans le sens de propagation de lumière, sur lequel au moins une partie de la lumière peut être réfléchie, **caractérisé en ce que** la partie de la lumière réfléchit de telle sorte que la lumière découple au niveau de l'élément de sortie de manière sensiblement isotrope sur une plage angulaire d'environ -90° à +90° par rapport au sens de propagation de lumière.

2. Composant guidant la lumière (10) selon la revendication 1, **caractérisé en ce que** le corps principal (12) est réalisé sous forme de tige de guidage de lumière (12a, 12b), en particulier en une matière plastique transparente telle que le PMMA ou le polycarbonate.

3. Composant guidant la lumière (10) selon l'une des revendications précédentes, **caractérisé en ce que** l'élément de réflexion (14) fait partie du corps principal (12).

4. Composant guidant la lumière (10) selon l'une des revendications précédentes, **caractérisé en ce que** l'élément de réflexion (20) est prévu à la transition avec l'élément de sortie (14).

5. Composant guidant la lumière (10) selon l'une des revendications précédentes, **caractérisé en ce que** l'élément de réflexion (20) présente un angle supérieur à 0° et inférieur à 90° par rapport au sens de propagation de lumière, en particulier un angle supérieur à l'angle critique de la réflexion totale.

6. Composant guidant la lumière (10) selon l'une des revendications précédentes, **caractérisé en ce que** l'élément de réflexion (20) est réalisé courbe, en particulier convexe.

7. Composant guidant la lumière (10) selon l'une des revendications précédentes, **caractérisé en ce que** l'élément de sortie (20) présente une pluralité de surfaces de sortie (16), en particulier une surface de sortie principale (16a) réalisée perpendiculaire au sens de propagation de lumière, et au moins une surface de sortie secondaire (16b, 16c) agencée de manière angulaire par rapport à celle-ci.

8. Composant guidant la lumière (10) selon l'une des revendications précédentes, **caractérisé en ce que** l'élément de sortie (14) présente une surface d'appui (18) qui est réalisée de telle sorte que l'élément de sortie (10) est apte à être agencé sur le module de bus de terrain (22) au moyen de la surface d'appui (18).

9. Composant guidant la lumière (10) selon l'une des revendications précédentes, **caractérisé en ce que** l'élément de sortie (14) est réalisé d'un seul tenant avec le corps principal (12) et/ou **en ce que** le corps principal (12) présente au moins un tronçon (38) en une masse de scellement transparente.

10. Composant guidant la lumière (10) selon l'une des revendications précédentes, **caractérisé en ce que** le corps principal (12) présente deux tiges de guidage de lumière (12a, 12b).

11. Module de bus de terrain (22), comprenant un boîtier (24) et un composant guidant la lumière (10) selon l'une des revendications précédentes.

12. Module de bus de terrain (22) selon la revendication 11, **caractérisé en ce que** le boîtier (24) présente au moins une double paroi (26) de sorte qu'une cavité (32) est réalisée entre la paroi (28) formant la surface du module de bus de terrain (22) et l'autre paroi (30) de la double paroi (26), le composant guidant la lumière (10) étant agencé dans la double paroi (26), en particulier au niveau d'un raccordement du module de bus de terrain (22).

13. Module de bus de terrain (22) selon la revendication 12, **caractérisé en ce que** l'élément de réflexion (20) est adjacent à la cavité (32).

14. Module de bus de terrain (22) selon l'une des revendications 11 à 13, **caractérisé en ce que** dans le module de bus de terrain (22), il est prévu au moins une source lumineuse (36), en particulier une LED multicolore qui est associée à un corps principal (12) du composant guidant la lumière (10).
